# EUROPEAN PATENT SPECIFICATION

(11) **EP 4 239 711 B1**
(45) Date of publication and mention of the grant of the patent: **03.06.2026**
(21) Application number: 22879578.7
(22) Date of filing: 14.01.2022
(51) Int. Cl.: H01M 4/13, H01M 4/139, H01M 4/62, H01M 4/36

(54) **POSITIVE ELECTRODE COMPOSITE MATERIAL FOR LITHIUM IRON PHOSPHATE SECONDARY BATTERY AND LITHIUM IRON PHOSPHATE SECONDARY BATTERY**
POSITIVELEKTRODENVERBUNDMATERIAL FÜR LITHIUM-EISENPHOSPHAT-SEKUNDÄRBATTERIE UND LITHIUM-EISENPHOSPHAT-SEKUNDÄRBATTERIE
MATÉRIAU COMPOSITE D'ÉLECTRODE POSITIVE POUR BATTERIE SECONDAIRE AU LITHIUM-FER-PHOSPHATE ET BATTERIE SECONDAIRE AU LITHIUM-FER-PHOSPHATE

(43) Date of publication of application: 06.09.2023
(73) Proprietor: Contemporary Amperex Technology (Hong Kong) Limited, Central, Central And Western District (HK)
(72) Inventor: ZHONG, Wei, Ningde City, Fujian 352100 (CN); ZHANG, Xiaowen, Ningde City, Fujian 352100 (CN); QIN, Pengcheng, Ningde City, Fujian 352100 (CN); BAI, Buxuan, Ningde City, Fujian 352100 (CN)
(74) Representative: Gong, Jinping
(86) International application number: PCT/CN2022/072028
(87) International publication number: WO 2023/133804

(56) References cited:
- WO-A1-2020/144289
- CN-A- 101 815 815
- CN-A- 112 701 281
- US-A1- 2018 351 200
- US-A1- 2019 288 331
- US-B1- 9 960 451
- ZHANG HONGWEI ET AL: "Hierarchically porous MXene decorated carbon coated LiFePO4 as cathode material for high-performance lithium-ion batteries", JOURNAL OF ALLOYS AND COMPOUNDS, ELSEVIER SEQUOIA, LAUSANNE, CH, vol. 876, 3 May 2021 (2021-05-03), XP086586171, ISSN: 0925-8388, [retrieved on 20210503], DOI: 10.1016/J.JALLCOM.2021.160210
- LI XICHAO ET AL: "Enhanced lithium and electron diffusion of LiFePO4cathode with two-dimensional Ti3C2MXene nanosheets", JOURNAL OF MATERIAL SCIENCE, KLUWER ACADEMIC PUBLISHERS, DORDRECHT, vol. 53, no. 15, 8 May 2018 (2018-05-08), pages 11078 - 11090, XP036503132, ISSN: 0022-2461, [retrieved on 20180508], DOI: 10.1007/S10853-018-2398-X

## Description

### Technical Field

The present invention relates to the technical field of lithium batteries, and in particular to a positive electrode composite material for a lithium iron phosphate secondary battery, a positive electrode for a lithium iron phosphate secondary battery, a lithium iron phosphate secondary battery, a battery module, a battery pack and a power consuming device.

### Background Art

Lithium iron phosphate materials have the characteristics such as good safety performance, excellent cycling performance, environmental friendliness, and extensive sources of raw materials. In these materials, lithium, iron, and phosphorus all are elements with abundant reserves on the earth, especially iron-based materials, which have wide sources and low price, have been recognized as the first choice for the positive electrode material for the new generation of lithium ion batteries, and have become the key research and development direction of main developed countries in the world today.

A lithium iron phosphate battery has the following advantages: 1. the service life thereof is ultra-long, wherein a capacity retention rate after 2000 cycles is 80% or more; 2. the use thereof is safe; since the lithium iron phosphate material has a olivine structure and is not easy to decompose at a high temperature, same is more stable than lithium cobaltate and lithium manganate materials; 3. it has no memory effect; and 4. it is green and environmentally friendly. Therefore, a lithium iron phosphate battery is particularly suitable for use as a traction battery, and has been widely developed and applied in electric tools, energy storage and electric vehicles in recent years.

However, the lithium iron phosphate battery has a relatively poor low-temperature performance. Various methods have been used to improve the low-temperature performance of lithium iron phosphate, such as to improve the ionic and electronic conductivity by doping at lithium sites, iron sites or even at the phosphoric acid sites, to control the effective reaction area by improving the particle size and morphology of primary particles or secondary particles, and to increase the electronic conductivity by adding an additional conductive agent, but the inherent characteristics of the lithium iron phosphate material, such as slow lithium ion diffusion at a low temperature and serious solid phase diffusion and cumulative polarization under a long pulse, determine that the low-temperature performance thereof is inferior to that of other positive electrode materials (e.g., lithium manganate).

A lithium iron phosphate battery has been applied to different fields, but it has relatively poor performance when being used in a low temperature environment. The discharge capacity thereof at - 20°C is only about 30% of that at normal temperature, which limits the application thereof in cold regions such as the north. This is also a major obstacle to the promotion and use thereof as a traction battery; so it is crucial to improve the low-temperature performance of lithium iron phosphate batteries.

Zhang et al., 2021 ("Hierarchically porous MXene decorated carbon coated LiFePO4 as cathode material for high-performance lithium-ion batteries", JOURNAL OF ALLOYS AND COMPOUNDS, ELSEVIER SEQUOIA, LAUSANNE, CH, vol. 876, 3 May 2021, ISSN: 0925-8388, DOI: 10.1016/J.JALLCOM.2021.160210) describes hierarchically porous Mxene decorated carbon coated LiFePO₄ as cathode material for high-performance lithium-ion batteries.

Kidanu et al. 2021 ("Enabling high-performance aqueous rechargeable Li-ion batteries through systematic optimization of TiS2/LiFePO4 full cell", APPLIED SURFACE SCIENCE, ELSEVIER, AMSTERDAM , NL, vol. 553, 20 March 2021, ISSN: 0169-4332, DOI: 10.1016/J.APSUSC.2021.149496) describes enabling high-performance aqueous rechargeable Li-ion batteries through systematic optimization of TiS₂/LiFePO₄ full cell.

### Summary of the Invention

The invention is set out in the appended set of claims. The objective of the present invention is to improve the low-temperature performance of a lithium iron phosphate battery and provide a low-temperature performance improved lithium iron phosphate battery.

A first aspect of the present invention provides a positive electrode composite material for a lithium iron phosphate secondary battery according to any of claims 1-6, comprising: a first type of material, which is a lithium iron phosphate material; and a second type of material and a third type of material, wherein the second type of material is AB_{b}, in which A is selected from at least one of Fe, Mn, Co, Ni, Ti, V, Nb, Ta, Zr, Hf, Cr, Mo, W, Re, Pt, Sn, Pb and Sb, B is selected from any one of S and Se, and b is in a value range of 1-4; the third type of material is a two-dimensional metal carbide, nitride or carbonitride MXene material of formula Mₙ₊₁Xₙ or Mₙ₊₁XₙTₓ, wherein M is a transition metal element, X is C element and/or N element, Tₓ represents a surface functional group -O, -OH, -Cl, or -F, and the third type of material has a layered structure, and n represents the number of layers and n = 1, 2 or 3, wherein the total content of the second type of material and the third type of material is 3-15% by weight, relative to the total weight of the positive electrode composite material.

As to the positive electrode composite material for a lithium iron phosphate secondary battery provided by the present invention, preferably, the positive electrode composite material comprises the first type of material and the second type of material, or the positive electrode composite material comprises the first type of material and the third type of material, or the positive electrode composite material comprises the first type of material, the second type of material and the third type of material. More preferably, the positive electrode composite material comprises a composite of the second type of material and the third type of material.

In the positive electrode composite material for a lithium iron phosphate secondary battery provided by the present invention, preferably, the second type of material is selected from at least one of TiS₂, VSe₂, TiSe₂, VS₂, NbS₂, NbSe₂, and TaS₂. Preferably, the third type of material is Ti₃C₂Tₓ or Ti₃C₂.

In the positive electrode composite material for a lithium iron phosphate secondary battery provided by the present invention, preferably, the composite of the second type of material and the third type of material is NbS₂-Ti₃C₂, TiS₂-Ti₃C₂ or VS₂-Ti₃C₂.

In the positive electrode composite material for a lithium iron phosphate secondary battery provided by the present invention, preferably, the total content of the second type of material and the third type of material is 3-15% by weight, relative to the total weight of the positive electrode composite material.

In the positive electrode composite material for a lithium iron phosphate secondary battery provided by the present invention, the second type of material may be composited with graphene.

In the positive electrode composite material for a lithium iron phosphate secondary battery provided by the present invention, the lithium iron phosphate material is selected from at least one of LiFePO₄, doped LiFePO₄, carbon-coated LiFePO₄ or doped and carbon-coated LiFePO₄.

A second aspect of the present invention provides a positive electrode for a lithium iron phosphate secondary battery according to claim 7, comprising: a positive electrode current collector, and a positive electrode film which is provided on at least one surface of the positive electrode current collector and comprises a positive electrode composite material, wherein the positive electrode composite material is the positive electrode composite material according to the first aspect of the present invention.

A third aspect of the present invention provides a lithium iron phosphate secondary battery according to claim 8, comprising a positive electrode for a lithium iron phosphate secondary battery of the second aspect of the present invention.

A fourth aspect of the present invention provides a battery module according to claim 9, comprising a lithium iron phosphate secondary battery of the third aspect of the present invention.

A fifth aspect of the present invention provides a battery pack according to claim 10, comprising a battery module of the fourth aspect of the present invention.

A sixth aspect of the present invention provides a power consuming device according to claim 11, comprising at least one of a lithium iron phosphate secondary battery of the third aspect of the present invention, a battery module of the fourth aspect of the present invention, and a battery pack of the fifth aspect of the present invention.

Therefore, the positive electrode composite material of the present invention can improve the power performance of a lithium iron phosphate secondary battery in a low state of charge (SOC) at a low temperature.

### Detailed Description of Embodiments

In order to make the objectives, technical solutions and beneficial technical effects of the present invention clearer, the present invention will be described in detail below in conjunction with specific embodiments. It should be understood that the embodiments described in this specification are only for explaining the present invention, instead of intending to limit the present invention.

For the sake of brevity, merely some numerical ranges are explicitly disclosed herein. However, any lower limit may be combined with any upper limit to form a range that is not explicitly specified; and any lower limit may be combined with any other lower limit to form a range that is not explicitly specified, and any upper limit likewise may be combined with any other upper limit to form a range that is not explicitly specified. Further, although not explicitly specified, each point or single value between endpoints of a range is included in the range. Thus, each point or single value can be taken as a lower or upper limit to be combined with any other point or single value or with any other lower or upper limit to form a range that is not explicitly specified.

In the description herein, it should be noted that, unless otherwise stated, "no less than" and "no more than" means the endpoints preceded by them being included, and "more" in the phrase "one or more" means two or more.

The above summary of the present invention is not intended to describe every disclosed embodiment or every implementation of the present invention. The following description will illustrate exemplary embodiments in more detail. Throughout the present application, teachings are provided by means of a number of embodiments, which can be used in various combinations. In each instance, a list is only a representative group and should not be interpreted as exhaustive.

A first aspect of the present invention relates to a positive electrode composite material for a lithium iron phosphate secondary battery. The positive electrode composite material comprises a positive electrode active substance. In the present invention, the positive electrode active substance includes a lithium iron phosphate material (also referred as "a first type of material" herein). Herein, a lithium iron salt material of an acid may be selected from lithium iron phosphate (LiFePO₄, which may be referred to as LFP for short), doped LiFePO₄, carbon-coated LiFePO₄ or doped and carbon-coated LiFePO₄.

In the present invention, the positive electrode active substance may also further include other positive electrode active substances known in the art for use in a lithium ion secondary battery, for example, a lithium transition metal oxide (e.g., lithium nickel cobalt manganese oxide) and a modified compound thereof, and these positive electrode active substances may be used alone or in combination of two or more.

In an embodiment of the present invention, an appropriate amount of a material having a discharge voltage plateau lower than that of LFP (i.e., a second type of material and/or a third type of material) is added to the positive electrode composite material for a lithium iron phosphate secondary battery, which comprises a lithium iron phosphate material (a first type of material).

Specifically, the positive electrode composite material for a lithium iron phosphate secondary battery comprises: a first type of material, which is a lithium iron phosphate material; and a second type of material and/or a third type of material, wherein the second type of material is AB_{b}, in which A is selected from at least one of Fe, Mn, Co, Ni, Ti, V, Nb, Ta, Zr, Hf, Cr, Mo, W, Re, Pt, Sn, Pb and Sb, B is selected from any one of S and Se, and b is in a value range of 1-4; the third type of material is a two-dimensional metal carbide, nitride or carbonitride MXene material of formula Mₙ₊₁Xₙ or Mₙ₊₁XₙTₓ, wherein M is a transition metal element, X is C element and/or N element, Tₓ represents a surface functional group -O, -OH, -Cl, or -F, and the third type of material has a layered structure, and n represents the number of layers and n = 1, 2 or 3.

When an appropriate amount of a second type of material and/or a third type of material having a low voltage plateau is added to the positive electrode composite material, correspondingly, a voltage plateau at a relatively low voltage level is introduced into the whole discharge voltage distribution curve of the battery. When the discharge voltage distribution curve of the battery reaches the end of the higher voltage plateau of the positive electrode active material itself and then drops rapidly, the lower voltage plateau introduced based on the existence of the material having a low voltage plateau can slow down the voltage drop trend at the final stage of discharge.

At a low temperature, at the final stage of discharge of the battery, i.e. the battery is in a low state of charge (SOC), after the intercalation of lithium ions into LFP is completed during the discharge process of the battery, a large number of lithium ions may be intercalated into the second type of material and the third type of material since the second type of material and the third type of material have a lower voltage plateau than that of LFP, thereby maintaining the continuous discharge of the battery; therefore, the power performance of the battery in the low state of charge at a low temperature may be improved. When the lithium iron phosphate secondary battery according to the present invention is used in an electric vehicle, since the lithium iron phosphate secondary battery has improved power performance, it is beneficial to improve the accelerating ability of the whole vehicle at a low temperature, thus allowing the full utilization of the battery power even under a working condition at a low temperature.

In an embodiment of the present invention, the positive electrode composite material comprises both the second type of material and the third type of material; more preferably, the second type of material is composited with the third type of material.

The composite between the second type of material and the third type of material can be achieved by loading the second type of material in the layer of the third type of material. The composite of the second type of material and the third type of material can further enhance the improvement effect of power performance.

The third type of material MXene has a two-dimensional layered structure, the chemical structure on the surface thereof can be adjusted, and different MXene can provide different potential windows. Moreover, MXene has characteristics of a high specific surface area and a high electrical conductivity. A large specific surface area can provide more storage sites; and a good electrical conductivity is beneficial for electron transport. MXene has a relatively low potential barrier to lithium ion diffusion, and the layered structure thereof is conducive to the fast diffusion of lithium ions between layers, which can achieve the fast intercalation and deintercalation of lithium ions.

Compared with the use of a second type of material or a third type of material alone, the composite material of a second type of material and a third type of material can increase the specific surface area, which is beneficial to increase the contact area and adsorption capacity of lithium ions on the composite material, thus improving the lithium storage capacity; moreover, the composite material of the second type of material or the third type of material can prevent the agglomeration of the second type of material itself, the relatively weak interaction between layers and the surface functional group improve the intercalation reaction, and more marginal active sites are exposed, which can improve the migration rate of lithium ions, thus improving the power performance of the battery.

In an embodiment of the present invention, preferably, the second type of material is selected from at least one of TiS₂, VSe₂, TiSe₂, VS₂, NbS₂, NbSe₂, and TaS₂, and preferably, the third type of material is Ti₃C₂Tₓ or Ti₃C₂.

In an embodiment of the present invention, preferably, the candidate of the second type of material and the third type of material is NbS₂-Ti₃C₂, or TiS₂-Ti₃C₂ or VS₂-Ti₃C₂.

In an embodiment of the present invention, the content of the second type of material and/or third type of material added should not be too low; otherwise, no obvious discharge plateau could be observed under the low state of charge of the battery, and the continuous discharge of the battery cannot be maintained at the final stage of discharge; their contents should not be too high either; otherwise, the overall capacity of the battery may be reduced due to the corresponding reduction of the content of the positive electrode active substances. The total content of the second type of material and third type of material added is 3-15% by weight, relative to the total weight of the positive electrode composite material.

In an embodiment of the present invention, the surface of the second type of material may have an electrically conductive material coating layer, or the second type of material and a electrically conductive material are subjected to composite modification, thus improving the electrical conductivity. The electrically conductive material is preferably graphene.

A second aspect of the present invention relates to a positive electrode for a lithium iron phosphate secondary battery, comprising: a positive electrode current collector, and a positive electrode film which is provided on at least one surface of the positive electrode current collector and comprises the above-mentioned positive electrode composite material.

A third aspect of the present invention relates to a lithium iron phosphate secondary battery, comprising a positive electrode for a lithium iron phosphate secondary battery of the second aspect of the present invention.

The structure and the preparation method of the lithium iron phosphate secondary battery according to the present invention are well-known per se. Generally, a lithium ion secondary battery comprises an outer package bag, and a cell and an electrolyte solution provided in the outer package bag, wherein the cell comprises a positive electrode film, a negative electrode film and a separator. In the lithium iron phosphate secondary battery according to the present invention, both the specific type and composition of the separator and electrolyte are not specifically limited, and can be selected according to actual requirements. Specifically, the separator may be selected from a polyethylene film, a polypropylene film, a polyvinylidene fluoride film, and a multi-layer composite film thereof.

As to the lithium iron phosphate secondary battery of the present invention, a solution of a lithium salt dissolved in an organic solvent is generally used as the non-aqueous electrolyte solution. The lithium salt is, for example, an inorganic lithium salt such as LiClO₄, LiPF₆, LiBF₄, LiAsF₆ and LiSbF₆, or an organic lithium salt such as LiCF₃SO₃, LiCF₃CO₂, Li₂C₂F₄(SO₃)₂, LiN(CF₃SO₂)₂, LiC(CF₃SO₂)₃, LiCₙF₂ₙ₊₁SO₃ (n ≥ 2), etc. The organic solvent used in the non-aqueous electrolyte solution is, for example, a cyclic carbonate ester such as ethylene carbonate, propylene carbonate, butylene carbonate, and vinylene carbonate; a chain carbonate ester, such as dimethyl carbonate, diethyl carbonate, and methyl ethyl carbonate; a chain ester such as methyl propionate; a cyclic ester such as γ-butyrolactone; a chain ether, such as dimethoxyethane, diethyl ether, diethylene glycol dimethyl ether, and triethylene glycol dimethyl ether; a cyclic ether, such as tetrahydrofuran and 2-methyltetrahydrofuran; nitriles, such as acetonitrile and propionitrile; or a mixture of these solvents.

The lithium iron phosphate secondary battery of the present invention is briefly described below.

First, a positive electrode film is prepared according to a conventional method in the art. Generally, in the positive electrode film, in addition to the above-mentioned positive electrode composite material, it is also necessary to add a conductive agent (e.g., Super P), a binder (e.g., PVDF), etc. Other additives can also be added as needed. Generally, these materials are mixed together and dispersed in a solvent (e.g., NMP), stirred until uniform and then evenly coated onto a positive electrode current collector, followed by drying to obtain a positive electrode film containing a positive electrode film layer. Materials, for example, a metal foil such as an aluminum foil, or a porous metal plate, can be used as the positive electrode current collector. An aluminum foil is preferred.

The negative electrode film of the present invention can be prepared by a well-known method in the art. Generally, a negative electrode active material and materials such as an optional conductive agent (e.g., Super P), a binder (e.g., SBR), and other optional additives are mixed together and dispersed in a solvent (e.g., deionized water), stirred until uniform and then evenly coated onto a negative electrode current collector, followed by drying to obtain a negative electrode film containing a negative electrode film layer. Materials, for example, a metal foil such as a copper foil, or a porous metal plate, can be used as the negative electrode current collector. A copper foil is preferred.

In the above-mentioned positive and negative electrode films, the percentage of the active substance in the positive and negative electrode film layers should not be too low; otherwise, it will results in a too low capacity; and the percentage of the active substance should not be too high either; otherwise, it would result in the reduction of the conductive agent and binder, which will reduce the electrical conductivity of the electrode film and the adhesion thereof to the current collector, thus reducing the electrical performance of the cell.

During the preparation of the positive and negative electrode films, the current collector may be coated on both sides or on one side.

Finally, the positive electrode film layer, the separator, and the negative electrode film layer are stacked in sequence, such that the separator is placed between the positive electrode film layer and the negative electrode film layer and plays a role of isolation, and then they are wound to obtain a bare cell; the bare cell is placed into an outer package and dried, then the electrolyte solution is injected, and the procedures such as vacuum encapsulation, standing, forming, and shaping are carried out to obtain a lithium iron phosphate secondary battery.

Other aspects of the present invention relate to a battery module, a battery pack, and a power consuming device. The lithium iron phosphate secondary battery of the present invention can form a battery module, and the battery module can form a battery pack. The power consuming device comprises at least one of a lithium iron phosphate secondary battery, a battery module and a battery pack provided by the present invention. The lithium iron phosphate secondary battery, the battery module or the battery pack may be used as a power supply or an energy storage unit of the power consuming device. The power consuming device may include a mobile device (e.g., a mobile phone, a tablet computer, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship and satellite, an energy storage system, etc., but is not limited thereto.

### [Examples]

Hereinafter, the examples of the present invention will be explained. The examples described below are exemplary and are merely for explaining the present invention, and should not be construed as limiting the present invention. The examples in which specific techniques or conditions are not specified are based on the techniques or conditions described in documents in the art or according to the product introduction. The reagents or instruments used therein for which manufacturers are not specified are all conventional products that are commercially available. Various parameters involved in the present specification have common meanings well-known in the art and can be measured according to methods well-known in the art. For example, a test may be performed according to the method given in the examples of the present invention.

In the examples of the present invention, the positive electrode film is prepared in a conventional manner, wherein the positive electrode film comprises a positive electrode composite material, conductive carbon and a binder.

The positive electrode composite material comprises a positive electrode active substance and an additive. Specifically, the positive electrode active substance is LiFePO₄ (i.e., the first type of material), and the additive is AB_{b} (i.e., the second type of material) and/or the MXene material (i.e., the third type of material). In the positive electrode composite material, the total content of the additive is 1-20% by weight (relative to the total weight of the positive electrode composite material).

The positive electrode active substance is 85% of the total mass of the positive electrode coating, and the compacted density is 2.4 g/cm³. A conventional graphite negative electrode film is used as the negative electrode, a conventional electrolyte solution (1 mol/L of LiPF₆ dissolved in an organic solvent (EC/DMC/EMC = 1/1/1 (mass ratio))) and a separator (a polyethylene film with a thickness of 14 µm) are used, and a lithium iron phosphate secondary battery with a wound structure is prepared and assembled according to conventional methods.

The source of the MXene material is not limited. It may be a commercially available product which is used directly or can be homemade. For example, MXene-Ti₃C₂Tₓ can be obtained by directly buying a commercially available product or can be prepared by the following method: at room temperature, 1 g Ti₃AlC₂ is placed into a 6 mol/L aqueous solution of HF (10 ml) for 7-10 days, washed with deionized water, then vacuum filtered, and dried at 60°C for 12 hours.

As an example of the composite of the second type of material and the third type of material, given that VS₂ is easier to prepare and the voltage plateau of VS₂ is closer to that of LiFePO₄, which has little influence on the overall change of the lower limit voltage of the battery, VS₂ is used as the second type of material. Correspondingly, the composite of the second type of material and the third type of material is VS₂-Ti₃C₂ at a molar ratio of 2 : 1.

The preparation steps for VS₂-Ti₃C₂ (at a molar ratio of 2 : 1) are as follows: the two-dimensional material MXene-Ti₃C₂ is prepared by a known chemical liquid etching process, and then VS₂ is loaded in the layer of MXene-Ti₃C₂ at the above-mentioned molar ratio. Specifically, first, MXene-Ti₃C₂ is placed in distilled water or deionized water for sonication for 30-60 minutes and dispersed until uniform, then VS₂ is added and stirred for 2-6 hours, the mixed solution is transferred into a hydrothermal reaction kettle for reaction at 180-250°C for 20-40 hours, and after the reaction is completed, the mixture is washed to obtain a precipitate, which is dried in a vacuum oven for later use.

NbS₂-Ti₃C₂ (at a molar ratio of 2 : 1) and TiS₂-Ti₃C₂ (at a molar ratio of 2 : 1) are prepared by the same method.

### Example 1:

The positive electrode active substance is LiFePO₄, and the additive is the second type of material, i.e. TiS₂. The content of TiS₂ is 3%, relative to the total weight of the two.

### Example 2:

The positive electrode active substance is LiFePO₄, and the additive is the second type of material, i.e. VSe₂. The content of VSe₂ is 3%, relative to the total weight of the two.

### Example 3:

The positive electrode active substance is LiFePO₄, and the additive is the second type of material, i.e. TiSe₂. The content of TiSe₂ is 3%, relative to the total weight of the two.

### Example 4:

The positive electrode active substance is LiFePO₄, and the additive is the second type of material, i.e. VS₂. The content of VS₂ is 3%, relative to the total weight of the two.

### Example 5:

The positive electrode active substance is LiFePO₄, and the additive is the second type of material, i.e. NbSe₂. The content of NbSe₂ is 3%, relative to the total weight of the two.

### Example 6:

The positive electrode active substance is LiFePO₄, and the additive is the second type of material, i.e. TaS₂. The content of TaS₂ is 3%, relative to the total weight of the two.

### Example 7:

The positive electrode active substance is LiFePO₄, and the additive is the third type of material, i.e. Ti₃C₂Tₓ. The content of Ti₃C₂Tₓ is 3%, relative to the total weight of the two.

### Example 8:

The positive electrode active substance is LiFePO₄, and the additive is the composite of the second type of material NbS₂ and the third type of material Ti₃C₂ at a molar ratio of 2 : 1. The total content of the additive is 3%, relative to the total weight of the two.

### Example 9:

The positive electrode active substance is LiFePO₄, and the additive is the composite of the second type of material TiS₂ and the third type of material Ti₃C₂ at a molar ratio of 2 : 1. The total content of the additive is 3%, relative to the total weight of the two.

### Example 10:

The positive electrode active substance is LiFePO₄, and the additive is the composite of the second type of material VS₂ and the third type of material Ti₃C₂ at a molar ratio of 2 : 1. The total content of the additive is 3%, relative to the total weight of the two.

### Example 11:

The positive electrode active substance is LiFePO₄, and the additive is the composite of the second type of material VS₂ and the third type of material Ti₃C₂ at a molar ratio of 2 : 1. The total content of the additive is 1%, relative to the total weight of the two.

### Example 12:

The positive electrode active substance is LiFePO₄, and the additive is the composite of the second type of material VS₂ and the third type of material Ti₃C₂ at a molar ratio of 2 : 1. The total content of the additive is 10%, relative to the total weight of the two.

### Example 13:

The positive electrode active substance is LiFePO₄, and the additive is the second type of material VS₂ and the third type of material Ti₃C₂ at a molar ratio of 2 : 1. The total content of the additive is 15%, relative to the total weight of the two.

### Example 14:

The positive electrode active substance is LiFePO₄, and the additive is the composite of the second type of material VS₂ and the third type of material Ti₃C₂ at a molar ratio of 2 : 1. The total content of the additive is 20%, relative to the total weight of the two.

### Comparative example:

The positive electrode active substance is LiFePO₄, and the positive electrode composite material does not contain the second type of material and the third type of material.

### [Performance test]

The corresponding low-temperature performance of the battery cells in examples 1-14 and the comparative example is tested.

The test method is as follows:
a cell in a specific state of charge (20% SOC) at a temperature of 25°C is placed at -25°C for discharging at a specific rate (0.7C) for 180 s, wherein a lower limit voltage is 1.5 V.

On the basis that the cells of each example and the comparative example are converted to have the same capacity, the internal resistance of the cell is used to reflect the improvement in the discharge power of the cell of each example relative to the comparative example (without the addition of any second type of material and third type of material in the positive electrode material). Within the same voltage range and at the same current, the smaller the internal resistance of the cell, the greater the discharge power of the cell of the corresponding example.

The calculation method for the resistance of the cell is: (the voltage before discharging - the voltage after discharging)/current

The calculation method for the proportion of improvement in the discharge power is: (the internal resistance of the cell of the comparative example - the internal resistance of the cell of each example)/the internal resistance of the cell of the comparative example

The test results of examples 1-14 and comparative example are shown in Table 1.

**Table 1**

| No. | Second type of material and/or third type of material | Content of the second type of material and/or third type of material (wt%) | Internal resistance of cell (-25°C, 20% soc, 180 s) 0.7C, lower limit voltage: 1.5 V | Proportion of improvement |
|---|---|---|---|---|
| Example 1 | TiS₂ | 3 | 10.07 | 31% |
| Example 2 | VSe₂ | 3 | 7.74 | 47% |
| Example 3 | TiSe₂ | 3 | 6.86 | 53% |
| Example 4 | VS₂ | 3 | 11.68 | 20% |
| Example 5 | NbSe₂ | 3 | 8.32 | 43% |
| Example 6 | TaS₂ | 3 | 10.66 | 27% |
| Example 7 | Ti₃C₂Tₓ | 3 | 10.95 | 25% |
| Example 8 | NbS₂-Ti₃C₂ (2 : 1) | 3 | 7.30 | 50% |
| Example 9 | TiS₂-Ti₃C₂ (2 : 1) | 3 | 8.61 | 41% |
| Example 10 | VS₂-Ti₃C₂ (2 : 1) | 3 | 9.49 | 35% |
| Example 11 | VS₂-Ti₃C₂ (2 : 1) | 1 | 14.16 | 3% |
| Example 12 | VS₂-Ti₃C₂ (2 : 1) | 10 | 7.59 | 48% |
| Example 13 | VS₂-Ti₃C₂ (2 : 1) | 15 | 6.72 | 54% |
| Example 14 | VS₂-Ti₃C₂ (2 : 1) | 20 | 6.42 | 56% |
| Comparative example | None | | 14.6 | |

With reference to table 1, it can be seen from the performance test results of examples 1-14 and comparative example that, the addition of the second type of material and/or the third type of material to the positive electrode composite material for a lithium iron phosphate secondary battery reduces the internal resistance of the cell, that is the discharge power is improved, relative to the comparative example without the addition of any second type of material and third type of material.

It can be seen from the comparison between examples 1-6 that, with the same addition amount, when TiSe₂ is added as the second type of material (example 3), the proportion of improvement in the discharge power is the largest. The reason is that the voltage plateau of the second type of material is an influential factor for the improvement in power performance. In the present invention, the low voltage plateau of the additive is preferably at 3.22 V or less). The voltage plateau of TiSe₂ is in a range of 1.7-2.1 V, which is greatly different from that of LiFePO₄, and thus TiSe₂ is a preferred second type of material.

As can be seen from the comparison between example 4, example 7 and example 10, with the same addition amount, the composite of the second type of material and the third type of material (example 10) can reduce the internal resistance and improve the discharge power, relative to the use of the second type of material (example 4) or the third type of material (example 7) alone.

In addition, it can be seen from the comparison between examples 10-14 that, with the increase of the addition amount, the effect of reducing the internal resistance of the cell becomes better. However, when the content of the additive in the positive electrode composite material is 1% by weight (example 11), since the addition amount is too low, the reduction in the internal resistance of the cell is not obvious. Therefore, the addition amount of 1% by weight is not preferred. In addition, although the effect of reducing the internal resistance of the cell is the best when the addition amount is 20% by weight, the content of the positive electrode active substance is correspondingly reduced due to the relatively high additive content, which may influence the overall discharge capacity. Therefore, the additive content of 20% by weight is not preferred either.

The content of the additive in the present invention may be in a range of 3-15% by weight, and the optimal proportion is 15% by weight.

## Claims

1. A positive electrode composite material for a lithium iron phosphate secondary battery, **characterized in that** the positive electrode composite material comprises:
a first type of material, which is a lithium iron phosphate material; and
a second type of material and a third type of material,
wherein the second type of material is AB_{b}, in which A is selected from at least one of Fe, Mn, Co, Ni, Ti, V, Nb, Ta, Zr, Hf, Cr, Mo, W, Re, Pt, Sn, Pb and Sb; B is selected from any one of S and Se; and b is in a value range of 1-4;
the third type of material is a two-dimensional metal carbide, nitride or carbonitride MXene material of formula Mₙ₊₁Xₙ or Mₙ₊₁XₙTₓ, wherein M is a transition metal element, X is C element and/or N element, Tₓ represents a surface functional group -O, -OH, -Cl, or -F, and the third type of material has a layered structure, and n represents the number of layers and n = 1, 2 or 3,
wherein the total content of the second type of material and the third type of material is 3-15% by weight, relative to the total weight of the positive electrode composite material.

2. The positive electrode composite material according to claim 1, **characterized in that** the positive electrode composite material comprises a composite of the second type of material and the third type of material.

3. The positive electrode composite material according to any one of claims 1-2, **characterized in that** the second type of material is selected from at least one of TiS₂, VSe₂, TiSe₂, VS₂, NbS₂, NbSe₂, and TaS₂.

4. The positive electrode composite material according to any one of claims 1-3, **characterized in that** the third type of material is Ti₃C₂Tₓ or Ti₃C₂.

5. The positive electrode composite material according to claim 2, **characterized in that** the composite of the second type of material and the third type of material is NbS₂-Ti₃C₂, TiS₂-Ti₃C₂ or VS₂-Ti₃C₂.

6. The positive electrode composite material according to any one of claims 1-5, **characterized in that** the second type of material is composited with graphene;
and/or
**characterized in that** the lithium iron phosphate material is selected from at least one of LiFePO₄, doped LiFePO₄, carbon-coated LiFePO₄ or doped and carbon-coated LiFePO₄.

7. A positive electrode for a lithium iron phosphate secondary battery, **characterized in that** the positive electrode comprises:
a positive electrode current collector and a positive electrode film, which is provided on at least one surface of the positive electrode current collector and comprises a positive electrode composite material, wherein the positive electrode composite material is a positive electrode composite material according to any one of claims 1-6.

8. A lithium iron phosphate secondary battery, **characterized by** comprising a positive electrode for a lithium iron phosphate secondary battery according to claim 7.

9. A battery module, **characterized by** comprising a lithium iron phosphate secondary battery according to claim 8.

10. A battery pack, **characterized by** comprising a battery module according to claim 9.

11. A power consuming device, **characterized by** comprising at least one of a lithium iron phosphate secondary battery according to claim 8, a battery module according to claim 9, and a battery pack according to claim 10.

## Patentansprüche

1. Positivelektroden-Verbundmaterial für eine Lithium-Eisenphosphat-Sekundärbatterie, **dadurch gekennzeichnet, dass** das Positivelektroden-Verbundmaterial umfasst:
einen ersten Typ von Material, der ein Lithium-Eisenphosphat-Material ist; und
einen zweiten Typ von Material und einen dritten Typ von Material,
wobei der zweite Typ von Material AB_{b} ist, wobei A ausgewählt ist aus wenigstens einem von Fe, Mn, Co, Ni, Ti, V, Nb, Ta, Zr, Hf, Cr, Mo, W, Re, Pt, Sn, Pb und Sb; B ausgewählt ist aus einem von S und Se; und b in einem Wertebereich von 1-4 liegt;
der dritte Typ von Material ein zweidimensionales Metallcarbid, Nitrid oder Carbonitrid-MXene-Material der Formel Mₙ₊₁Xₙ oder Mₙ₊₁XₙTₓ ist, wobei M ein Übergangsmetallelement ist, X ein C-Element und/oder N-Element ist, Tₓ eine funktionelle Oberflächengruppe -O, -OH, -Cl oder -F darstellt, und der dritte Typ von Material eine Schichtstruktur aufweist und n die Anzahl der Schichten darstellt und n = 1, 2 oder 3,
wobei der Gesamtgehalt an dem zweiten Typ von Material und dem dritten Typ von Material 3-15 Gew.-%, bezogen auf das Gesamtgewicht des Positivelektroden-Verbundmaterials, beträgt.

2. Positivelektroden-Verbundmaterial nach Anspruch 1, **dadurch gekennzeichnet, dass** das Positivelektroden-Verbundmaterial einen Verbund aus dem zweiten Typ von Material und dem dritten Typ von Material umfasst.

3. Positivelektroden-Verbundmaterial nach einem der Ansprüche 1-2, **dadurch gekennzeichnet, dass** der zweite Typ von Material ausgewählt ist aus wenigstens einem von TiS₂, VSe₂, TiSe₂, VS₂, NbS₂, NbSe₂ und TaS₂.

4. Positivelektroden-Verbundmaterial nach einem der Ansprüche 1-3, **dadurch gekennzeichnet, dass** der dritte Typ von Material Ti₃C₂Tₓ oder Ti₃C₂ ist.

5. Positivelektroden-Verbundmaterial nach Anspruch 2, **dadurch gekennzeichnet, dass** der Verbund aus dem zweiten Typ von Material und dem dritten Typ von Material NbS₂-Ti₃C₂, TiS₂-Ti₃C₂ oder VS₂-Ti₃C₂ ist.

6. Positivelektroden-Verbundmaterial nach einem der Ansprüche 1-5, **dadurch gekennzeichnet, dass** der zweite Typ von Material mit Graphen zusammengesetzt ist;
und/oder
**dadurch gekennzeichnet, dass** das Lithium-Eisenphosphat-Material ausgewählt ist aus wenigstens einem von LiFePO₄, dotiertem LiFePO₄, kohlenstoffbeschichtetem LiFePO₄ und dotiertem und kohlenstoffbeschichtetem LiFePO₄.

7. Positivelektrode für eine Lithium-Eisenphosphat-Sekundärbatterie, **dadurch gekennzeichnet, dass** die Positivelektrode umfasst:
einen Positivelektroden-Stromabnehmer und einen Positivelektrodenfilm, der auf wenigstens einer Oberfläche des Positivelektroden-Stromabnehmers bereitgestellt ist und ein Positivelektroden-Verbundmaterial umfasst, wobei das Positivelektroden-Verbundmaterial ein Positivelektroden-Verbundmaterial nach einem der Ansprüche 1-6 ist.

8. Lithium-Eisenphosphat-Sekundärbatterie, **gekennzeichnet durch** Umfassen einer Positivelektrode für eine Lithium-Eisenphosphat-Sekundärbatterie nach Anspruch 7.

9. Batteriemodul, **gekennzeichnet durch** Umfassen einer Lithium-Eisenphosphat-Sekundärbatterie nach Anspruch 8.

10. Batteriepack, **gekennzeichnet durch** Umfassen eines Batteriemoduls nach Anspruch 9.

11. Stromverbrauchende Vorrichtung, **gekennzeichnet durch** Umfassen von wenigstens einem von einer Lithium-Eisenphosphat-Sekundärbatterie nach Anspruch 8, einem Batteriemodul nach Anspruch 9 und einem Batteriepack nach Anspruch 10.

## Revendications

1. Matériau composite d'électrode positive pour une batterie secondaire au phosphate de fer et de lithium, **caractérisé en ce que** le matériau composite d'électrode positive comprend :
un premier type de matériau, qui est un matériau de phosphate de fer et de lithium ; et
un deuxième type de matériau et un troisième type de matériau,
le deuxième type de matériau étant AB_{b}, A étant choisi parmi au moins Fe, Mn, Co, ni, Ti, V, Nb, Ta, Zr, Hf, Cr, Mo, W, Re, Pt, Sn, Pb et Sb ; B étant choisi parmi S et se ; et b étant dans une plage de valeurs de 1 à 4 ;
le troisième type de matériau étant un carbure métallique bidimensionnel, un nitrure ou carbonitrure MXène de formule Mₙ₊₁Xₙ ou Mₙ₊₁XₙTₓ, M étant un élément de métal de transition, X étant un élément C et/ou un élément N, Tx représentant un groupe fonctionnel de surface -O, - OH, -Cl ou -F, et le troisième type de matériau ayant une structure en couches, et n représentant le nombre de couches et n = 1, 2 ou 3,
la teneur totale du deuxième type de matériau et du troisième type de matériau étant comprise entre 3 et 15 % en poids, par rapport au poids total du matériau composite d'électrode positive.

2. Matériau composite d'électrode positive selon la revendication 1, **caractérisé en ce que** le matériau composite d'électrode positive comprend un composite du deuxième type de matériau et du troisième type de matériau.

3. Matériau composite d'électrode positive selon l'une quelconque des revendications 1 et 2, **caractérisé en ce que** le deuxième type de matériau est choisi parmi au moins l'un de TiS₂, VSe₂, TiSe₂, VS₂, NbS₂, NbSe₂ et TaS₂.

4. Matériau composite d'électrode positive selon l'une quelconque des revendications 1 à 3, **caractérisé en ce que** le troisième type de matériau est Ti₃C₂Tₓ ou Ti₃C₂.

5. Matériau composite d'électrode positive selon la revendication 2, **caractérisé en ce que** le composite du deuxième type de matériau et du troisième type de matériau est NbS₂-Ti₃C₂, TiS₂-Ti₃C₂ ou VS₂-Ti₃C₂.

6. Matériau composite d'électrode positive selon l'une quelconque des revendications 1 à 5, **caractérisé en ce que** le deuxième type de matériau est composé de graphène ;
et/ou
**caractérisé en ce que** le matériau de phosphate de fer et de lithium est choisi parmi au moins un élément parmi LiFePO₄, LiFePO₄ dopé, LiFePO₄ revêtu de carbone ou LiFePO₄ dopé et revêtu de carbone.

7. Électrode positive pour batterie secondaire au phosphate de fer et de lithium, **caractérisée en ce que** l'électrode positive comprend :
un collecteur de courant d'électrode positive et un film d'électrode positive, qui est prévu sur au moins une surface du collecteur de courant d'électrode positive et comprend un matériau composite d'électrode positive, le matériau composite d'électrode positive étant un matériau composite d'électrode positive selon l'une quelconque des revendications 1 à 6.

8. Batterie secondaire au phosphate de fer et de lithium, **caractérisée en ce qu'**elle comprend une électrode positive pour une batterie secondaire au phosphate de fer et de lithium selon la revendication 7.

9. Module de batterie, **caractérisé en ce qu'**il comprend une batterie secondaire au phosphate de fer et de lithium selon la revendication 8.

10. Bloc-batterie, **caractérisé en ce qu'**il comprend un module de batterie selon la revendication 9.

11. Dispositif consommateur d'énergie, **caractérisé en ce qu'**il comprend au moins un élément parmi une batterie secondaire au phosphate de fer et de lithium selon la revendication 8, un module de batterie selon la revendication 9, et un bloc de batterie selon la revendication 10.
